# EUROPÄISCHE PATENTSCHRIFT

(11) **EP 1 490 256 B1**
(45) Veröffentlichungstag und Bekanntmachung des Hinweises auf die Patenterteilung: **11.02.2009**
(21) Anmeldenummer: 03714763.4
(22) Anmeldetag: 01.03.2003
(51) Int. Cl.: B62D 25/20, B62D 25/08

(54) **KRAFTFAHRZEUG**
MOTOR VEHICLE
VEHICULE A MOTEUR

(30) Priorität: 30.03.2002 DE 10214372
(43) Veröffentlichungstag der Anmeldung: 29.12.2004
(73) Patentinhaber: Bayerische Motoren Werke Aktiengesellschaft, 80809 München (DE)
(72) Erfinder: NEUMEIER, Franz-Xaver, 84539 Ampfing (DE); SCHIPPAN, Jürgen, 85617 Assling (DE)
(74) Vertreter: Günther, Hans Peter
(86) Internationale Anmeldenummer: PCT/EP2003/002116
(87) Internationale Veröffentlichungsnummer: WO 2003/082657

(56) Entgegenhaltungen:
- EP-A- 0 603 536
- DE-A- 3 942 794
- DE-A- 10 023 110
- DE-C- 3 905 650
- DE-U- 29 520 166

## Beschreibung

Die Erfindung betrifft ein Kraftfahrzeug gemäß dem Oberbegriff des Anspruchs 1.

Aus der DE 39 05 650 ist bereits ein Kraftfahrzeug mit einer selbsttragenden Karosserie bekannt, bei der zur Versteifung der Karosserie an der Bodenunterseite V-förmig angeordnete Versteifungsstreben vorgesehen sind, die jeweils in Richtung eines Fahrzeughecks und eines Fahrzeug-Vorderbaus zusammenlaufen. Durch die V-förmige Anordnung der Versteifungsstreben am Karosserie-Unterboden verringern sich die Torsionsamplituden der Karosserie aufgrund der erhöhten Torsionsstabilität der Karosserie.

Aus der EP 603 536 B1 ist ein weiteres Kraftfahrzeug bekannt, bei dem am Unterboden eine erste V-förmige Versteifungsverstrebung in einer horizontalen Ebene verläuft. Eine zweite V-förmige Versteifungsverstrebung ist in einer vertikalen Querebene angeordnet. Die erste V-förmige Versteifungsverstrebung ist mit der zweiten V-förmigen Versteifungsverstrebung im Heckbereich an den zusammenlaufenden Enden der Versteifungsverstrebungen direkt miteinander verbunden. Die freien Enden der beiden V-förmigen Versteifungsverstrebungen sind an Längsträgern befestigt, die zum einen unterhalb der Fahrgastzelle und zum anderen unterhalb des Fahrzeughecks verlaufen. Die Versteifungsverstrebungen dienen ebenfalls zu Erhöhung der Torsionsstabilität der Karosserie

Aus der DE 100 23 110 A ist ein Kraftfahrzeug mit einer selbsttragenden Karosserie bekannt, die eine Fahrgastzelle aufweist. Am Boden der Karosserie verlaufen Längsträger, die sich von einem Fahrzeugvorderbau über die Fahrgastzelle bis in ein Fahrzeugheck erstrecken. Ferner sind zwei hintere, V-förmig verlaufende Versteifungsstreben vorgesehen, die mit ihren vorderen Enden an den unterhalb der Fahrgastzelle verlaufenden Längsträgern befestigt sind. Die dazu gegenüberliegenden Enden der V-förmig verlaufenden Versteifungsstreben sind über einen Aufnahmeaufbau am Boden des Fahrzeughecks angeordnet. Die beiden hinteren Versteifungsstreben liegen in etwa in einer horizontalen Ebene.

Am Aufnahmeaufbau ist ein Anbindungsbereich ausgebildet, der im Wesentlichen in der Mitte der Fahrzeugbreite liegt. Der Aufnahmeaufbau weist ein Gehäuse mit einer Spitze auf, die sich nach unten in Richtung der Fahrbahn erstreckt. Der Aufnahmeaufbau ist an einem hinteren Querträger befestigt. Am Aufnahmeaufbau kommen die beiden Enden der hinteren, V-förmig verlaufenden Versteifungsstreben zusammen und sind an dem Aufnahmeaufbau befestigt.

An der Spitze des Gehäuses des Aufnahmeaufbaus sind symmetrisch zur Fahrzeug-Längsachse x zwei seitliche Arme angeordnet. Jeweils ein Ende eines seitlichen Armes ist an der Spitze des Gehäuses des Aufnahmeaufbaus befestigt. Das dazugehörige, jeweilige andere Ende des jeweiligen seitlichen Armes ist am hinteren Querträger angeordnet. Die seitlichen Arme verlaufen aufgrund der Höhendifferenz vom Gehäuse schräg nach oben und nach außen in Fahrzeugquerrichtung y. Von der Spitze des Gehäuses des Aufnahmeaufbaus verläuft eine Stütze schräg nach oben in Richtung des Bodens der Rohkarosserie zu einer Mitte eines Heckquerträgers.

Die beiden als Zug-Druckstäbe ausgebildeten V-förmig verlaufenden Versteifungsstreben bilden mit der mittig zum Heckquerträger verlaufenden Stütze die Form eines räumlichen Y.

Wird bei einem Unfall oder dergleichen eine Kraft auf den Heckquerträger ausgeübt, dann wird diese Kraft über die vom Heckquerträger schräg nach unten zur Spitze des Gehäuses des Aufnahmeaufbaus verlaufende Stütze in die beiden V-förmig verlaufenden Versteifungsstreben weitergeleitet. An den freien Enden der Versteifungsstreben, die jeweils an einem Schweller befestigt sind, wird die vom Heckquerträger kommende Kraft in den jeweiligen Schweller eingeleitet.

Die beiden seitlichen Arme des Aufnahmeaufbaus können eine Querkraftkomponente der eingeleiteten Kraft über den hinteren Querträger in den Boden der Rohkarosserie einleiten. Über die schräg verlaufende Stütze können somit Kräfte in Fahrzeuglängsrichtung x und in vertikaler Richtung z übertragen werden, während durch die seitlichen Arme des Aufnahmeaufbaus nur Kräfte in Fahrzeugquerrichtung y und in vertikaler Richtung z übertragen werden können.

Unter Einbeziehung der seitlichen Arme des Aufnahmeaufbaus ergibt sich in der Draufsicht eine fünfarmige Heckverstrebung.

Aufgabe der Erfindung ist es, ein Kraftfahrzeug mit einer Karosserie zu schaffen, die eine hohe Steifigkeit aufweist.

Diese Aufgabe wird durch die Merkmale des Anspruchs 1 gelöst.

Durch die erfindungsgemäße Versteifung der Karosserie am Unterboden wird sowohl die Torsionssteifigkeit als auch die Biegesteifigkeit erhöht. Die erfindungsgemäße Versteifung ist vorteilhafterweise bei einem offenen Fahrzeug, wie einem Cabriolet oder einem Roadster, sowie auch bei geschlossenen Fahrzeugen, insbesondere Kombis und Fahrzeugen ohne B-Säule, einsetzbar.

Die erfindungsgemäße Versteifung aus zwei V-förmig verlaufenden Versteifungsverstrebungen, die an ihren zusammenlaufenden Enden an der Fahrzeugkarosserie miteinander verbunden sind, weist fünf Verbindungsstellen mit der Karosserie auf. In einer vorteilhaften Ausführungsform ist dazu am Boden der Fahrzeugkarosserie ein zur Krafteinleitung und Kraftverteilung geeignetes Bauteil befestigt. Durch die erfindungsgemäße Versteifung ergibt sich in einfacher Weise eine Erhöhung der Torsionssteifigkeit und zusätzlich der Biegesteifigkeit der Karosserie.

In einer vorteilhaften Ausführungsform verlaufen die am Fahrzeugheck befindlichen, hinteren Längsträger höhenversetzt gegenüber den tieferliegenden, unterhalb der Fahrgastzelle angeordneten, äußeren Längsträgern. Der gemeinsame Anbindungsbereich der beiden Versteifungsverstrebungen liegt unterhalb der hinteren Längsträger. In einer vorteilhaften Ausführungsform befindet sich der gemeinsame Anbindungsbereich an einer Reserveradmulde oder einem sonstigen tieferliegenden heckseitigen Karosserieteil. Die erfindungsgemäße Versteifung weist durch diese Anordnung eine räumliche X-Form auf. Diese Bauweise hat den Vorteil, dass vor der Reserveradmulde bzw. dem heckseitigen Boden noch ein Bauraum zur Anordnung von Bauteilen, beispielsweise der Hinterachse, zur Verfügung steht.

Vorteilhafterweise ist in einer Ausführungsform zusätzlich zu der hinteren, am Fahrzeugheck befindlichen X-förmigen Versteifung, eine vordere Fahrzeugversteifung vorgesehen, bei der zwei Versteifungsstreben V-förmig in Richtung eines Fahrzeugvorderbaus verlaufen. Durch die zusätzlichen vorderen Versteifungsverstrebungen, die in etwa in einer waagerechten Ebene liegen, wird auch der vordere Bereich der Karosserie versteift.

Eine Ausführungsform der Erfindung wird nachstehend anhand von Zeichnungen beispielshalber beschrieben. Dabei zeigen:
- Figur 1: eine perspektivische Ansicht von unten auf einen teilweise dargestellten Boden eines Kraftfahrzeuges,
- Figur 2: eine Ansicht auf den teilweise dargestellten Boden des in der Figur 1 gezeigten Kraftfahrzeuges und
- Figur 3: eine Ansicht von der Seite auf einen teilweise dargestellten Heckbereich des in der Figur 1 gezeigten Kraftfahrzeuges.

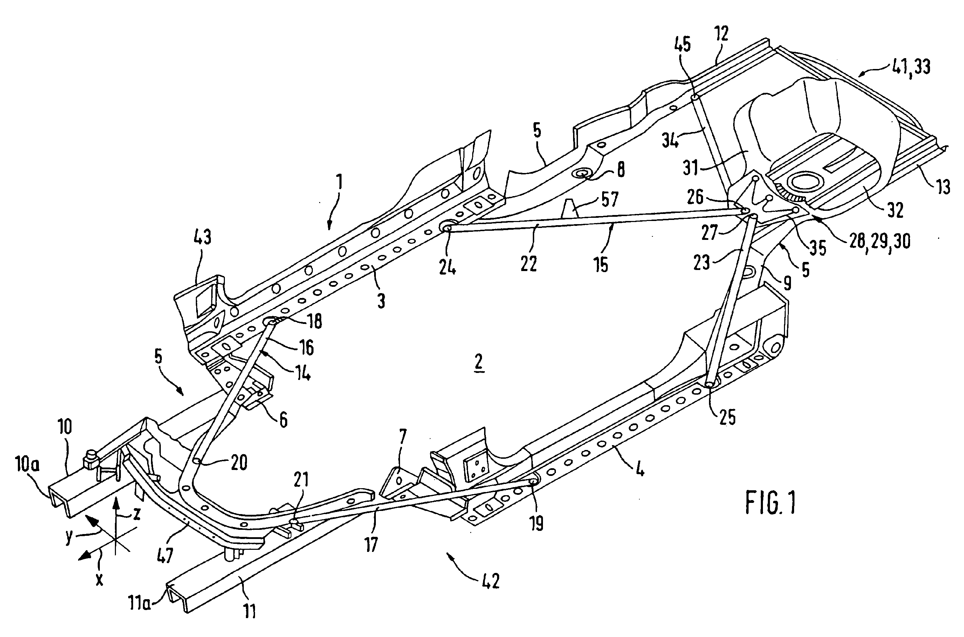

Die Figur 1 zeigt einen nur teilweise dargestellten Boden 2 eines Kraftfahrzeuges 1. Unterhalb einer nur teilweise dargestellten Fahrgastzelle 43 verlaufen parallel zueinander, zwei äußere Längsträger oder Schweller 3, 4. In Höhe von nicht weiter dargestellten Radhäusern 5 ist jeweils eine vordere und hintere Abkröpfung 6, 7 sowie 8 und 9 vorgesehen, die die äußeren Längsträger 3, 4 mit vorderen und hinteren Längsträgern 10, 11 und 12, 13 verbindet.

Die vorderen Längsträger 10, 11 sind in der gezeigten Ausführungsform als Motorträger ausgebildet, deren freie, vorderen Enden 10a und 11a in einem Fahrzeug-Vorderbau 42 enden, während die dazu gegenüberliegenden Enden 10b und 11b Längsträger 10, 11 am Boden 2 der Fahrgastzelle 43 befestigt sind. An den Längsträgern 10, 11 ist in der gezeigten Ausführungsform ein festverschraubter Vorderachsträger 47 oder dergleichen angeordnet, der in der Draufsicht eine U-Form aufweist. Die hinteren Längsträger 12, 13 sind in einem Fahrzeugheck 41 ausgebildet.

In der in der Figur 1 gezeigten Ausführungsform ist eine vordere, in etwa waagrecht verlaufende V-förmige Versteifung 14 sowie eine hintere X-förmige Versteifung 15 vorgesehen. Die vordere V-förmige Versteifung 14 besteht aus zwei Versteifungsstreben 16, 17, die mit ihren, in Bezug auf die Fahrzeuglängsrichtung x gesehen, hinteren Enden 18, 19 an den äußeren Längsträgern 3, 4 befestigt sind.

Die vorderen Enden 20, 21 der Versteifungsstreben 16, 17 sind an dem festverschraubten Vorderachsträger 47 befestigt.

Die hintere X-förmige Versteifung 15 weist zwei V-förmige, in einer horizontalen Ebene X-Y-verlaufenden Versteifungsstreben 22, 23 auf. Die vorderen, freien Enden 24, 25 der Versteifungsstreben 22, 23 sind an den äußeren Längsträgern 3, 4 befestigt. Die hinteren Enden 26, 27 der Versteifungsstreben 22, 23 sind in der gezeigten Ausführungsform an einem Boden 28 des Fahrzeughecks 41 an einer gemeinsamen Befestigungsstelle 30 über ein Zusatzbauteil 29 befestigt. Damit ergeben sich drei Anbindungsstellen der Versteifungsstreben 22, 23 an der Karosserie des Kraftfahrzeuges 1

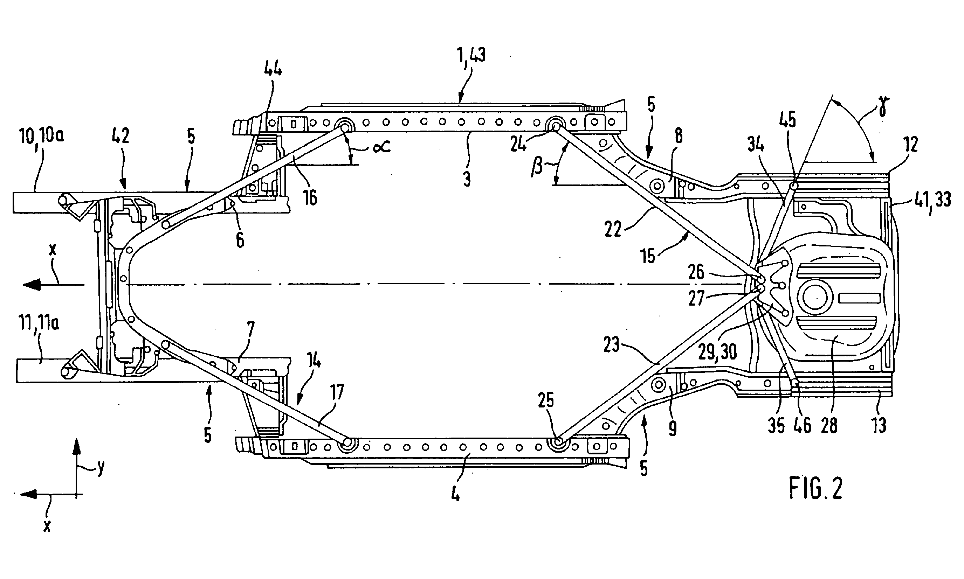

Die Befestigungsstelle 30 befindet sich in der vorliegenden Ausführungsform vor einer vorderen Wand 31 einer Reserveradmulde 32. Von dem Zusatzbauteil 29 verlaufen V-förmig schräg nach außen und schräg nach hinten in Richtung eines hinteren Endes 33 des Fahrzeughecks 41 zwei heckseitige Versteifungsstreben 34, 35, wie dies insbesondere aus der Draufsicht der Figur 2 hervorgeht. An dem Anbindungsbereich 30 sind zusätzlich die unteren Enden 37, 38 der heckseitigen Versteifungsstreben 34, 35 befestigt. Die oberen Enden 45, 46 der heckseitigen Versteifungsstreben 34, 35 sind an hinteren Längsträger 12, 13 befestigt, so dass sich insgesamt fünf Befestigungsstellen der Versteifungsstreben 22, 23 und 34, 35 mit Boden 2 der Karosserie des Kraftfahrzeuges 1 ergeben.

In der Draufsicht der Figur 2 sind Winkel α, β und γ erkennbar, unter denen die vorderen Versteifungsstreben 16, 17 der vorderen V-förmigen Versteifung 14 sowie die hinteren Versteifungsstreben 22, 23 und die heckseitigen Versteifungsstreben 34, 35 der hinteren Versteifung 15 in Bezug auf die Fahrzeuglängsrichtung x verlaufen. In einer vorteilhaften Ausführungsform beträgt der Winkel α = ca. 23° ± 3°, der Winkel β = 36° ± 3° und der Winkel γ = 67° ± 3°.

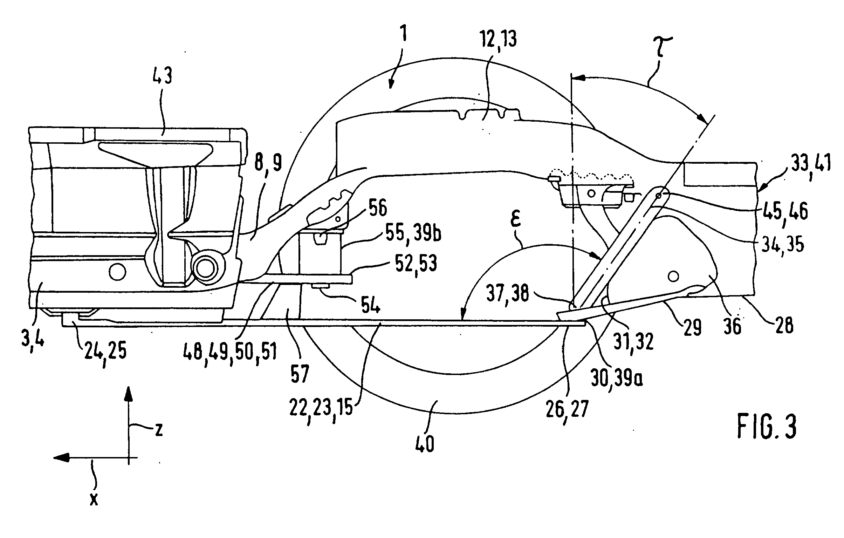

In der Seitenansicht der Figur 3 geht der waagerechte Verlauf der hinteren, V-förmig verlaufenden Versteifungsstreben 22, 23 in der X-Y-Ebene hervor. Die heckseitigen, V-förmig verlaufenden Versteifungsstreben 34, 35 sind in Bezug auf eine in der Z-Y-Ebene liegende Senkrechten um einen Winkel τ in Richtung des hinteren Endes 33 des Kraftfahrzeuges 1 geneigt, wobei der Winkel τ = ca. 37° ± 3° beträgt. Dadurch ergibt sich ein Winkel ε zwischen den waagrecht verlaufenden Versteifungsstreben 22, 23 und den schräg nach oben verlaufenden Versteifungsstreben 34, 35 von ε = ca. 125° ± 3°.

Aus der Figur 3 geht ferner hervor, dass hinter den heckseitigen Versteifungsstreben 34, 35 ein wannenförmiges Verstärkungsbauteil 36 angeordnet ist, das die Reserveradmulde 32 zur optimalen Krafteinleitung umgibt. Der Anbindungsbereich 30, an dem die hinteren Enden 26, 27 der Versteifungsstreben 22, 23 und die unteren Enden 37, 38 der heckseitigen Versteifungsstreben 34, 35 befestigt sind, befindet sich in Höhe eines hinteren Bereiches 39a von hinteren Rädern 40 des Kraftfahrzeuges 1.

An jeweils einem vorderen Bereich 39b der hinteren Räder 40 des Kraftfahrzeuges 1 sind beidseitig unterhalb der Abkröpfungen 8 und 9 in Fahrzeuglängsrichtung x sich erstreckende Streben 48, 49 mit ihrem einen Ende 50, 51 befestigt. Das jeweilige freie Ende 52, 53 der Streben 48, 49 dient als untere Befestigungsstelle 54 eines Gummilagers oder dgl. 55. Das jeweilige Gummilager 55 ist mit seinem oberen Ende 56 an den dazu gegenüberliegenden hinteren Längsträgern 12, 13 befestigt. Die waagrecht verlaufenden Versteifungsstreben 22, 23 sind über jeweils ein Verbindungselement 57 mit jeweils einer der dazu benachbarten Strebe 48, 49 verbunden. Dadurch ergibt sich eine Erhöhung der Steifigkeit der Versteifungsstreben 22, 23.

## Patentansprüche

1. Kraftfahrzeug mit einer selbsttragenden Karosserie, die eine Fahrgastzelle (43) aufweist, mit am Boden (2) der Karosserie verlaufenden Längsträgern (3, 4), die sich von einem Fahrzeugvorderbau (42) über die Fahrgastzelle (43) bis in ein Fahrzeugheck (41) erstrecken, mit zwei hinteren, V-förmig verlaufenden Versteifungsstreben (22, 23), die mit ihren vorderen Enden (24, 25) zum einen an den unterhalb der Fahrgastzelle (43) verlaufenden Längsträgern (3, 4) befestigt sind und zum anderen mit den dazu gegenüberliegenden Enden (26, 27) am Boden (2) des Fahrzeughecks (41) angeordnet sind, wobei die beiden hinteren Versteifungsstreben (22, 23) in etwa in einer horizontalen Ebene liegen, wobei die heckseitigen Enden (26, 27) der hinteren Versteifungsstreben (22, 23) an einem Anbindungsbereich (30) am Boden (28, 29) des Fahrzeughecks (41) befestigt sind,
**dadurch gekennzeichnet, dass** an dem Anbindungsbereich (30) die Enden (37, 38) von zwei weiteren V-förmig verlaufenden, heckseitigen Versteifungsstreben (34, 35) angeordnet sind, dass die heckseitigen Versteifungsstreben (34, 35) schräg nach hinten, in Richtung eines hinteren Endes (33) des Fahrzeughecks (41) und schräg nach außen in Richtung von hinteren, am Boden (28) des Fahrzeughecks (41) befindlichen Längsträgern (12, 13) verlaufen und dass die heckseitigen Versteifungsstreben (34, 35) an den hinteren Längsträgern (12, 13) befestigt sind.

2. Kraftfahrzeug nach Anspruch 1, **dadurch gekennzeichnet, dass** die waagrecht verlaufenden, hinteren Versteifungsstreben (22, 23) über den Anbindungsbereich (30) am Boden (28) des Fahrzeughecks (41) mit den geneigt verlaufenden, heckseitigen Versteifungsstreben (34, 35) eine X-förmige Versteifung (15) mit fünf Befestigungsstellen mit dem Boden (2) der Karosserie des Kraftfahrzeuges (1) bilden.

3. Kraftfahrzeug nach den Ansprüchen 1 oder 2, **dadurch gekennzeichnet, dass** die hinteren Längsträger (12, 13) in Bezug auf die Längsträger (3, 4) der Fahrgastzelle (43) höhenversetzt verlaufen.

4. Kraftfahrzeug nach einem der vorhergehenden Ansprüche, **dadurch gekennzeichnet, dass** eine vordere, V-förmige Versteifung (14) vorgesehen ist, die sich zwischen einem vorderen Ende (44) der Fahrgastzelle (43) bis in den Fahrzeugvorderbau (42) erstreckt, dass die vordere V-förmige Versteifung (14) vordere Versteifungsstreben (16, 17) aufweist, die mit ihren hinteren Enden (18, 19) an den Längsträgern (3, 4) der Fahrgastzelle (43) befestigt sind und dass die vorderen Enden (20, 21) der Versteifungsstreben (16, 17) an einem Fahrschemel oder dergleichen (47) und/oder an den vorderen Längsträgern (10, 11) befestigt sind.

5. Kraftfahrzeug nach einem der vorhergehenden Ansprüche, **dadurch gekennzeichnet, dass** die nachfolgend definierten Winkel (α, β, γ) zwischen der Fahrzeuglängsrichtung x und jeweils den vorderen, hinteren und heckseitigen Versteifungsstreben (16, 17; 22, 23; 34,35) in der waagrechten Ebene X-Y ausgebildet sind,
dass der Winkel α zwischen den jeweiligen vorderen Versteifungsstreben (16, 17) und der Fahrzeuglängsachse x einen Wert von α = ca. 23° ± 3° hat, dass der Winkel β zwischen den jeweiligen hinteren Versteifungsstreben (22, 23) und der Fahrzeuglängsachse x bei β = 36° ± 3° liegt und
dass der Winkel γ zwischen den jeweiligen, heckseitigen Versteifungsstreben (34, 35) und der Fahrzeuglängsachse x ungefähr γ = 67° ± 3° beträgt.

6. Kraftfahrzeug nach einem der vorhergehenden Ansprüche, **dadurch gekennzeichnet, dass** die hintere X-förmige Versteifung (15) einen Winkel τ zwischen einer senkrechten Ebene in Richtung der Vertikalen z und den heckseitigen Versteifungsstreben (34, 35) aufweist, der bei τ = ca. 37° ± 3° liegt und dass ein Winkel ε zwischen den hinteren Versteifungsstreben (22, 23) und den heckseitigen Versteifungsstreben (34, 35) ausgebildet ist, der ε = ca. 125° ± 3° beträgt.

7. Kraftfahrzeug nach einem der vorhergehenden Ansprüche, **dadurch gekennzeichnet, dass** sich die hinteren Versteifungsstreben (22, 23) jeweils über mindestens ein Verbindungselement (57) am Boden (2) des Kraftfahrzeuges (1) abstützen.

## Claims

1. A motor vehicle comprising a self-supporting body containing a passenger compartment (43), longitudinal members (3, 4) on the bottom (2) of the body and extending from a vehicle front part (42) of the vehicle across the passenger compartment (43) to a vehicle tail (41) and also containing two rear V-shaped reinforcing struts (22, 23) connected at their front ends (24, 25) to the longitudinal members (3, 4) under the passenger compartment (43) and at their opposite ends (26, 27) to the bottom (2) of the vehicle tail (41), wherein the two rear reinforcing struts (22, 23) lie in an approximately horizontal plane and wherein the tail ends (26, 27) of the rear reinforcing struts (22, 23) are fastened to the bottom (28, 29) of the vehicle tail (41) at a place (30),
**characterised in that** the ends (37, 38) of two additional tail-end reinforcing struts (34, 35) extending in a V-shape are disposed at the place (30), the tail-end reinforcing struts (34, 35) slope backwards towards a rear end (33) of the tail (41) and slope outwards towards rear longitudinal members (12, 13) on the bottom (28) of the vehicle tail (41), and the tail-end reinforcing struts (34, 35) are fastened to the rear longitudinal members (12, 13).

2. A motor vehicle according to claim 1, **characterised in that** the horizontal rear reinforcing struts (22, 23), via the place (30) on the bottom (28) of the vehicle tail (41), co-operate with the sloping tail-end reinforcing struts (34, 35) to form an X-shaped reinforcement (15) connected at five places to the bottom (2) of the body of the motor vehicle (1).

3. A motor vehicle according to claim 1 or claim 2, **characterised in that** the rear longitudinal members (12, 13) are vertically offset from the longitudinal members (3, 4) of the passenger compartment (43).

4. A motor vehicle according to any of the preceding claims, **characterised in that** a front V-shaped reinforcement (14) extends between a front end (44) of the passenger compartment (43) and the vehicle front part (42), the front V-shaped reinforcement (14) has front reinforcing struts (16, 17) fastened at their rear ends (18, 19) to the longitudinal members (3, 4) of the passenger compartment (43) and the front ends (20, 21) of the reinforcing struts (16, 17) are fastened to a sub-frame or the like (47) and/or to the front longitudinal members (10, 11).

5. A motor vehicle according to any of the preceding claims, **characterised in that** the angles (α, β, γ) defined hereinafter between the vehicle longitudinal direction (x) and the front, rear and tail-end reinforcing struts (16, 17; 22, 23; 34, 35) are in the horizontal plane (X-Y),
the angle (α) between each front reinforcing strut (16, 17) and the vehicle longitudinal axis (x) is about 23 ± 3°,
the angle (β) between each rear reinforcing strut (22, 23) and the vehicle longitudinal axis (x) is about 36 ± 3° and
the angle (γ) between each tail-end reinforcing strut (34, 35) and the vehicle longitudinal axis (x) is about 67 ± 3°.

6. A motor vehicle according to any of the preceding claims, **characterised in that** the rear X-shaped reinforcement (15) has an angle (τ) between a vertical plane in the direction of the vertical (z) and the tail-end reinforcing struts (34, 35), the angle (τ) being about 37 ± 3°, and the angle (ε) between the rear reinforcing struts (22, 23) and the tail-end reinforcing struts (34, 35) is about 125 ± 3°.

7. A motor vehicle according to any of the preceding claims, **characterised in that** the rear reinforcing struts (22, 23) each abut the bottom (2) of the motor vehicle (1) via at least one connecting element (57).

## Revendications

1. Véhicule automobile à carrosserie autoporteuse comportant un habitacle (43) pour les passagers ayant des longerons (3, 4) au niveau du plancher (2) de la carrosserie, ces longerons s'étendant de la structure avant (42) du véhicule en passant par l'habitacle (43) jusqu'à la structure arrière (41) du véhicule, ayant des entretoises de rigidification (22, 23) disposées suivant une forme de V et dont les extrémités avant (24, 25) sont fixées aux longerons (3, 4) passant sous l'habitacle (43) et qui sont fixées par les extrémités opposées (26, 27) au plancher (2) de la structure arrière (41) du véhicule,
les deux entretoises de rigidification (22, 23) arrière, étant situées sensiblement dans un plan horizontal,
les extrémités côté arrière (26, 27) des entretoises de rigidification arrière (22, 23) étant fixées au niveau d'une zone de fixation (30) au plancher (28, 29) de la structure arrière (41) du véhicule,
**caractérisé en ce qu'**
- au niveau de la zone de fixation (30), les extrémités (37, 38) de deux entretoises de rigidification (34, 35) côté arrière, faisant entre elles un angle en V, sont prévues de façon que les entretoises de rigidification côté arrière (34, 35) soient disposées en biais vers l'arrière en direction de l'extrémité arrière (33) de la structure arrière (41) du véhicule en étant inclinées vers l'extérieur en direction des longerons arrière (12, 13) prévus au niveau du plancher (28) de la structure arrière (41) du véhicule, et
- les entretoises de rigidification (34, 35) côté arrière sont fixées aux longerons arrière (12, 13).

2. véhicule automobile selon la revendication 1,
**caractérisé en ce que**
les entretoises de rigidification arrière (22, 23), disposées horizontalement, forment par l'intermédiaire de la zone de fixation (30) au fond (28) de la structure arrière (41) du véhicule, avec les entretoises de rigidification (34, 35) côté arrière, disposées de manière inclinée, une structure de rigidification (15) en forme de X ayant cinq points de fixation au plancher (2) de la carrosserie du véhicule automobile (1).

3. Véhicule automobile selon la revendication 1 ou 2,
**caractérisé en ce que**
les longerons arrière (12, 13) sont décalés en hauteur par rapport aux longerons (3, 4) de l'habitacle (43) du véhicule.

4. Véhicule automobile selon les revendications précédentes,
**caractérisé par**
- un moyen de rigidification (14) avant en forme de V s'étendant entre l'extrémité avant (44) de l'habitacle (43) jusqu'à la structure avant (42) du véhicule,
- le moyen de rigidification (14) avant en forme de V comportant des entretoises de rigidification avant (16, 17), dont les extrémités arrière (18, 19) sont fixées aux logerons (3, 4) de l'habitacle (43) et les extrémités avant (21, 22) des longerons de rigidification (16, 17) sont fixées à un faux châssis ou analogue (47) et/ou aux longerons avant (10, 11).

5. Véhicule automobile selon les revendications précédentes,
**caractérisé en ce que**
- les angles (α, β, γ) définis ci-après entre la direction longitudinale x du véhicule et chaque fois les entretoises de rigidification avant, arrière et côté arrière (16, 17 ; 22, 23 ; 34, 35) sont développés dans un plan horizontal X-Y,
- l'angle α entre les entretoises de rigidification avant respectives (16, 17) et l'axe longitudinal x du véhicule a une valeur α = environ 23° ± 3°,
- l'angle β entre les entretoises de rigidification arrière respectives (22, 23) et l'axe longitudinal x du véhicule correspond à β = 36° ± 3°, et,
- l'angle γ entre les entretoises de rigidification respectives (34, 35) côté arrière et l'axe longitudinal x du véhicule correspond sensiblement à γ =67° ± 3°.

6. Véhicule automobile selon les revendications précédentes,
**caractérisé en ce que**
le moyen de rigidification (15), arrière en forme de X, a un angle τ, compris entre le plan vertical dans la direction de l'axe vertical z et les entretoises de rigidification côté arrière (34, 35) telles que τ = environ 37° ± 3° et il y a un angle ε entre les entretoises de rigidification arrière (22, 23) et les entretoises de rigidification côté arrière (34, 35) telles que ε = environ 125° ± 3°.

7. Véhicule automobile selon les revendications précédentes,
**caractérisé en ce que**
les entretoises de rigidification arrière (22, 23) s'appuient chacune sur au moins un élément de liaison (57) contre le plancher (2) du véhicule automobile (1).
